# EUROPEAN PATENT APPLICATION

(11) **EP 4 733 253 A1**
(43) Date of publication of application: **29.04.2026**
(21) Application number: 25223238.4
(22) Date of filing: 15.12.2025
(51) Int. Cl.: C01B 32/05, H01M 4/133, H01M 4/1393, H01M 4/587, H01M 10/054, H01M 10/0525, H01M 4/36

(54) **HARD CARBON MATERIAL, SECONDARY BATTERY, AND ELECTRONIC DEVICE**

(30) Priority: 16.12.2024 CN 202411854039
(71) Applicant: Ningde Amperex Technology Limited, Ningde, Fujian 352100 (CN)
(72) Inventor: SHAO, Wenlong, Ningde City, Fujian Province, 352100 (CN); YI, Zheng, Ningde City, Fujian Province, 352100 (CN); ZHENG, Zigui, Ningde City, Fujian Province, 352100 (CN); XIE, Yuansen, Ningde City, Fujian Province, 352100 (CN)
(74) Representative: Kraus & Lederer PartGmbB

(57) **Abstract**

A hard carbon material has a flake-like structure, where a length of the flake-like structure is denoted as L, and a width of the flake-like structure is denoted as D1, where L satisfies: 2 µm ≤ L ≤ 16 µm; and D1 satisfies: 0.1 µm ≤ D1 ≤ 3 µm. The hard carbon material can have good contact between particles thereof, better processing performance, and a higher gram capacity, thereby further increasing the compacted density of the battery electrode plate, reducing electrode plate resistance, and improving the energy density of the secondary battery while improving the rate performance, and cycling performance of the secondary battery.

## Description

### TECHNICAL FIELD

The present application relates to the field of electrochemical technology, and more particularly, to a hard carbon material, a secondary battery, and an electronic apparatus.

### BACKGROUND

With the rapid development of electric vehicles and portable electronic apparatuses in recent years, the demand for secondary batteries (for example, lithium-ion batteries) with respect to energy density, safety, and cycling performance has been increasing. The design of new secondary batteries with comprehensively improved performance is key to meeting the growing demand. Improving the composition and structure of electrode active materials in secondary batteries is one of the effective methods to enhance the fast charge-discharge performance and cycling performance of batteries, and also critical to achieving high-safety, high-energy-density batteries.

Negative electrode active materials account for 5%-15% of battery costs and are one of four main materials in battery systems. Graphite, as the most commonly used negative electrode material for lithium-ion batteries, has advantages such as stable charge-discharge platforms and high efficiency. However, its capacity development has reached its limit. Therefore, there is an urgent need to develop an improved negative electrode to further address the issues faced by graphite negative electrodes. Hard carbon materials have attracted significant attention due to their high theoretical capacity, low volume swelling, and fast charge-discharge capabilities. However, the inherent hard skeleton and high porosity of hard carbon particles lead to issues such as low compacted density and poor inter-particle contact of hard carbon materials, resulting in undesirable capacity, cycling performance, and rate performance of secondary batteries.

### SUMMARY

The purpose of the present application is to provide a hard carbon material, a secondary battery, and an electronic apparatus to attempt to address at least one of the problems existing in the related art to at least some extent.

According to a first aspect of the present application, the present application provides a hard carbon material, where the hard carbon material has a flake-like structure, the flake-like structure has a length denoted as L, and the flake-like structure has a width denoted as D1, where L satisfies: 2 µm ≤ L ≤ 16 µm; and D1 satisfies: 0.1 µm ≤ D1 ≤ 3 µm. The length and width of the flake-like hard carbon material provided by the present application affect the stacking state of the particles, which in turn influences the mass transfer process of electrochemical reactions. When the length of the flake-like hard carbon material is within the above range, the flake-like hard carbon material, when used alone or in combination with a negative electrode active material such as graphite, can simultaneously come into contact with multiple particles, enhancing electron conductivity and ion conductivity between the particles, thereby accelerating the kinetic process of the battery and improving the rate performance. When the width of the flake-like hard carbon material is within the above range, the processing performance of the material can be improved, enabling the electrode plate to have good adhesion performance, thereby enhancing the cycling stability of the secondary battery. That is, by controlling parameters such as the length and width of the flake-like hard carbon material within the above ranges in the present application, the hard carbon material can have good contact and better processing performance, increasing the compacted density of the battery electrode plate, reducing electrode plate resistance, and thereby improving the energy density of the secondary battery while enhancing the rate performance and cycling performance of the secondary battery.

In some embodiments of the present application, the hard carbon material satisfies at least one of the following conditions:
(1) the length L of the flake-like structure satisfies: 2 µm ≤ L ≤ 15 µm;
(2) the width D1 of the flake-like structure satisfies: 0.5 µm ≤ D1 ≤ 1.9 µm;
(3) a height H1 of the flake-like structure satisfies: 0.02 µm ≤ H1 ≤ 2.5 µm, or 0.05 µm ≤ H1 ≤ 1.9 µm;
(4) a ratio of the length L of the flake-like structure to a height H1 of the flake-like structure satisfies: 2.5 ≤ L/H1 ≤ 750, or 2.5 ≤ L/H1 ≤ 200; or
(5) a ratio of the width D1 of the flake-like structure to a height H1 of the flake-like structure satisfies: 1 ≤ D1/H1 ≤ 12.

In some embodiments of the present application, the length L of the flake-like structure satisfies: 2 µm ≤ L ≤ 15 µm. When the length of the flake-like hard carbon material provided by the present application is within the above range, the flake-like hard carbon material, when used alone or in combination with a negative electrode active material such as graphite, can further come into contact with multiple particles simultaneously, further enhancing electron conductivity and ion conductivity between the particles, thereby accelerating the kinetic process of the battery and further improving rate performance.

In some embodiments of the present application, the width D1 of the flake-like structure satisfies: 0.5 µm ≤ D1 ≤ 1.9 µm. When the width of the flake-like hard carbon material provided by the present application is within the above range, the processing performance of the material can be further improved, enabling the electrode plate to have good adhesion performance, thereby further enhancing the cycling stability of the secondary battery.

In some embodiments of the present application, the height H1 of the flake-like structure satisfies: 0.05 µm ≤ H1 ≤ 2.5 µm. Preferably, the height H1 of the flake-like structure satisfies: 0.05 µm ≤ H1 ≤ 1.9 µm. The height of the flake-like hard carbon material provided by the present application being within the above range can impart a certain degree of toughness to the particles, allowing the material to bend to some extent. When the material is used alone or in combination with a negative electrode active material such as graphite, it can come into contact with multiple surfaces of the particles simultaneously, effectively reducing interface impedance and improving the rate performance of the secondary battery.

In some embodiments of the present application, the ratio of the length L of the flake-like structure to the height H1 of the flake-like structure satisfies: 2.5 ≤ L/H1 ≤ 750; and preferably, the ratio of the length L of the flake-like structure to the height H1 of the flake-like structure satisfies: 2.5 ≤ L/H1 ≤ 200. When the ratio of the length L to the height H1 of the flake-like hard carbon material provided by the present application is within the above range, the rate performance of the secondary battery can be further improved.

In some embodiments of the present application, the ratio of the width D1 of the flake-like structure to the height H1 of the flake-like structure satisfies: 1 ≤ D1/H1 ≤ 12. When the ratio of the width D1 to the height H1 of the flake-like hard carbon material provided by the present application is within the above range, the cycling performance and rate performance of the secondary battery can be further improved.

In some embodiments of the present application, the length L of the flake-like structure consists of three parts: a left arc surface length L1, a square region length L2, and a right arc surface length L3, where the relationship between L1, L2, and L3 satisfies: 2 µm ≤ L1 + L2 + L3 ≤ 16 µm, 0.01 µm ≤ L1 ≤ 1.5 µm, and 10 ≤ L2/L1 ≤ 80. The morphology of the arc surfaces on two sides of the hard carbon material is influenced by synthesis conditions. The arc surface structure affects the stacking state of the flake-like structure. The presence of arc surfaces can alleviate internal stress formed during particle stacking, preventing particle fracture. In addition, the stacking of multiple arc surfaces is likely to form a small number of pores, which can store electrolyte and enhance the wettability of the active material with the electrolyte. By controlling the left arc surface length, square region length, and right arc surface length of the flake-like structure of the hard carbon material in the present application within the above ranges, good contact of the hard carbon material can be achieved, increasing the compacted density of the battery electrode plate, thereby improving the energy density of the secondary battery.

In some embodiments of the present application, the hard carbon material satisfies at least one of the following conditions:
(6) 2 µm ≤ L1 + L2 + L3 ≤ 15 µm;
(7) 0.05 µm ≤ L1 ≤ 1 µm; and
(8) 11 ≤ L2/L1 ≤ 38.

In some embodiments of the present application, the hard carbon material satisfies: 2 µm ≤ L1 + L2 + L3 ≤ 15 µm.

In some embodiments of the present application, the hard carbon material satisfies: 0.05 µm ≤ L1 ≤ 1 µm.

In some embodiments of the present application, the hard carbon material satisfies: 11 ≤ L2/L1 ≤ 38.

By controlling the left arc surface length, square region length, and right arc surface length of the flake-like structure of the hard carbon material in the present application within the above ranges, better contact of the hard carbon material can be further promoted, increasing the compacted density of the battery electrode plate and the energy density of the secondary battery.

In some embodiments of the present application, the hard carbon material satisfies at least one of the following conditions:
(9) 0.8 µm ≤ L2 ≤ 15 µm, or 1.9 µm ≤ L2 ≤ 13 µm; or
(10) 0.05 µm ≤ L3 ≤ 1.5 µm, or 0.05 µm ≤ L3 ≤ 1 µm.

In some embodiments of the present application, the square region length L2 of the hard carbon material satisfies: 0.8 µm ≤ L2 ≤ 15 µm, or 1.9 µm ≤ L2 ≤ 13 µm. When the length L2 of the material is controlled within the above range, the material, when used alone or in combination with a negative electrode active material such as graphite, can come into contact with multiple particles simultaneously, enhancing electron conductivity and ion conductivity between the particles, thereby accelerating the kinetic process of the battery and improving rate performance.

In some embodiments of the present application, the right arc surface length L3 of the flake-like structure satisfies: 0.05 µm ≤ L3 ≤ 1.5 µm, or 0.05 µm ≤ L3 ≤ 1 µm. The presence of the arc surface structure can alleviate internal stress formed during particle stacking, preventing particle fracture. In addition, the stacking of multiple arc surfaces is likely to form a small number of pores, which can store electrolyte and enhance the wettability of the active material with the electrolyte.

In some embodiments of the present application, a closed-pore volume of the flake-like structure is 0.01-0.4 cm³/g. In some embodiments of the present application, the closed-pore volume of the flake-like structure is 0.05-0.28 cm³/g. An increase in the closed-pore count in the hard carbon material helps store more active metal ions, thereby increasing the storage capacity of active metal ions. However, excessive closed pores reduce the particle density and pose a risk of pore enlargement, which is detrimental to energy storage. By controlling the closed-pore volume of the hard carbon material within the above range in the present application, higher capacity of the hard carbon material can be achieved, and the active material can have a lower energy storage platform, thereby improving the energy density of the secondary battery.

In some embodiments of the present application, the hard carbon material satisfies at least one of the following conditions:
(11) a surface of the flake-like structure further includes a carbon coating layer;
(12) a surface of the flake-like structure further includes a carbon coating layer, wherein a thickness of the carbon coating layer ranges from 20-100 nm;
(13) the flake-like structure contains a first element, wherein the first element includes at least one of Li, Na, K, Rb, Mg, Ca, or Zn;
(14) the flake-like structure contains a first element, wherein the first element includes at least one of Li, Na, K, Rb, Mg, Ca, or Zn, and a percentage of the first element relative to a total mass of the hard carbon material is 0.01%-0.9%;
(15) a specific surface area of the flake-like material ranges from 2-28 m²/g; or
(16) an ID/IG value of the flake-like material is 1.0-1.3.

In some embodiments of the present application, in the hard carbon material, the surface of the flake-like structure further includes the carbon coating layer. Applying the carbon layer on the surface of the hard carbon helps reduce surface defects and reduce exposure of the flake-like pore structure, improving the initial Coulombic efficiency of the negative electrode active material, and enabling the negative electrode active material to have a high reversible capacity, thereby enhancing the energy density and cycling stability of the secondary battery.

In some embodiments of the present application, in the hard carbon material, the surface of the flake-like structure further includes the carbon coating layer, where the thickness of the carbon coating layer ranges from 20-100 nm. Applying the carbon layer on the surface of the hard carbon material and controlling the thickness of the carbon coating layer within the above range help further reduce surface defects and further reduce exposure of flake-like pore structures, further improving the initial Coulombic efficiency of the negative electrode active material, and enabling the negative electrode active material to have a high reversible capacity, thereby enhancing the energy density and cycling stability of the secondary battery.

In some embodiments of the present application, in the hard carbon material, the flake-like structure contains the first element, where the first element includes at least one of Li, Na, K, Rb, Mg, Ca, or Zn. Introducing the first element into the flake-like structure of the hard carbon material can induce the storage of active metal ions in the hard carbon material, increasing the storage capacity of active metal ions.

In some embodiments of the present application, in the hard carbon material, the flake-like structure contains the first element, where the first element includes at least one of Li, Na, K, Rb, Mg, Ca, or Zn, and the percentage of the first element relative to the total mass of the hard carbon material is 0.01%-0.9%. By controlling the percentage of the first element in the hard carbon material within the above range in the present application, the storage of active metal ions in the hard carbon material can be further induced, further increasing the storage capacity of active metal ions. Applying the hard carbon material of the present application to a secondary battery can help increase the gram capacity of the negative electrode of the battery, thereby improving the energy density of the secondary battery.

In some embodiments of the present application, in the hard carbon material, the specific surface area of the flake-like material ranges from 2-28 m²/g. An excessively large specific surface area of the hard carbon material causes active metal ions to adsorb on the material's surface, consuming more electrolyte to form a stable SEI layer, and leading to a decrease in the initial Coulombic efficiency of the material. By controlling the specific surface area of the hard carbon material within the above range in the present application, excessive electrolyte consumption can be avoided while ensuring the formation of a stable SEI, enabling the hard carbon material to have a higher reversible capacity and higher initial Coulombic efficiency, thereby improving the energy density and cycling stability of the secondary battery.

In some embodiments of the present application, in the hard carbon material, the ID/IG value of the flake-like structure is 1.0-1.3. ID represents the peak area of peak D in the Raman spectrum of the hard carbon material, and IG represents the peak area of peak G in the Raman spectrum of the hard carbon material. By controlling the ID/IG value of the hard carbon material provided by the present application within the above range, the hard carbon material has an appropriate degree of defects, further promoting ion adsorption and bonding while reducing irreversible capacity loss caused by high defect levels, thereby facilitating an increase in the gram capacity of the hard carbon material. According to a second aspect of the present application, the present application provides a negative electrode plate, where the negative electrode plate includes a negative electrode current collector and a negative electrode active material layer disposed on at least one surface of the negative electrode current collector, the negative electrode active material layer includes a negative electrode active material, and the negative electrode active material includes any one of the hard carbon materials according to the first aspect of the present application. The negative electrode plate containing the above hard carbon material has high capacity, good interfacial adhesion, and high compacted density. When applied to a secondary battery, it can increase the energy density of the secondary battery while improving the cycling performance and rate performance of the secondary battery.

In some embodiments of the present application, the negative electrode active material includes any one of the hard carbon materials according to the first aspect of the present application and a graphite material. Typically, graphite has a high compacted density, but the graphite has a low gram capacity and poor rate performance. The hard carbon material has a high gram capacity but a relatively low compacted density. Compounding the hard carbon material with the graphite material in the present application offers a negative electrode material with both high capacity and high compacted density, and offers a negative electrode active material layer with both high capacity and high compacted density. Ordinary granular hard carbon is not conducive to compounding hard carbon materials with negative electrode active materials such as graphite, whereas the flake-like hard carbon material provided by the present application increases contact between hard carbon particles and between hard carbon and graphite particles, facilitating a reduction in electrode plate resistance and further improving the rate performance of the negative electrode active material.

In some embodiments of the present application, the negative electrode active material includes any one of the hard carbon materials according to the first aspect of the present application and the graphite material, and based on a total mass of the negative electrode active material, a mass percentage of the hard carbon material is 0.1% to 99.9%. In the present application, by controlling the relative proportion of the flake-like hard carbon and graphite in the compounded electrode plate and adjusting the mass percentage of the hard carbon material in the negative electrode active material layer within the range of the present application, the compacted density of the negative electrode active material layer can be optimized, thereby improving the energy density, rate performance, and cycle retention rate of the secondary battery.

In some embodiments of the present application, the compacted density of the negative electrode active material layer ranges from 1.0-1.9 g/cm³. By controlling the compacted density of the negative electrode active material layer within the above range, the amount of the negative electrode active material per unit area can be increased, thereby improving the energy density of the secondary battery.

According to a third aspect of the present application, the present application provides a secondary battery, which includes the negative electrode plate provided by any one of the embodiments of the second aspect of the present application. The secondary battery containing the above negative electrode plate has a high energy density and good cycling performance.

According to a fourth aspect of the present application, the present application provides an electronic apparatus, which includes the secondary battery provided by any one of the embodiments of the third aspect of the present application. The electronic apparatus containing the above secondary battery has a long service life.

### BRIEF DESCRIPTION OF DRAWINGS

To more clearly illustrate the technical solutions of the embodiments of the present application or the prior art, the drawings required for the description of the embodiments or the prior art are briefly introduced below. It is obvious that the drawings described below are only some embodiments of the present application, and other embodiments may be obtained by those skilled in the art based on these drawings.
FIG. 1 is a schematic diagram of the structure of a hard carbon material provided by an embodiment of the present application;
FIG. 2 is a charge-discharge curve of a negative electrode active material of Comparative Example 1-1 in a Li/Li⁺ potential range of 0 V to 2.5 V;
FIG. 3 is a charge-discharge curve of a negative electrode active material of Example 1-2 in a Li/Li⁺ potential range of 0 V to 2.5 V; and
FIG. 4 is a charge-discharge curve of a negative electrode active material of Example 2-3 in a Li/Li⁺ potential range of 0 V to 2.5 V.

### DESCRIPTION OF EMBODIMENTS

The technical solutions in the embodiments of the present application are clearly and completely described below in conjunction with the drawings in the embodiments of the present application. It is obvious that the described embodiments are only a part of the embodiments of the present application, and not all of them. Based on the embodiments of the present application, all other embodiments obtained by those skilled in the art based on the present application fall within the scope of protection of the present application.

It should be noted that in the specific embodiments of the present application, a lithium-ion battery is used as an example of a secondary battery to explain the present application, but the secondary battery of the present application is not limited to lithium-ion batteries.

Graphite, as the most commonly used negative electrode material for lithium-ion batteries, has advantages such as stable charge-discharge platforms and high efficiency. However, its capacity development has reached its limit. Therefore, there is an urgent need to develop an improved negative electrode to further address the issues faced by graphite negative electrodes. Hard carbon materials have attracted significant attention due to their high theoretical capacity, low volume swelling, and fast charge-discharge capabilities. However, the inherent hard skeleton and high porosity of hard carbon particles lead to issues such as low compacted density and poor inter-particle contact of hard carbon materials, resulting in undesirable capacity, cycling performance, and rate performance of secondary batteries. Based on this, the inventors, starting from the negative electrode active material itself, have found through extensive research that by preparing a hard carbon material with a special morphology and using it alone or in combination with commercial graphite, issues such as low gram capacity, poor adhesion, and low conductivity of the negative electrode plate can be addressed, thereby increasing the compacted density of the battery electrode plate, and improving the energy density of the secondary battery while improving the rate performance, and cycling performance of the secondary battery.

According to a first aspect of the present application, the present application provides a hard carbon material, where the hard carbon material has a flake-like structure, a length of the flake-like structure is denoted as L, and a width of the flake-like structure is denoted as D1, and a height of the flake-like structure is denoted as H1, where L satisfies: 2 µm ≤ L ≤ 16 µm; and D1 satisfies: 0.1 µm ≤ D1 ≤ 3 µm. Specifically, the length L of the flake-like structure may be 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, or a range composed of any two of the above values. Specifically, the width D1 of the flake-like structure may be 0.1 µm, 0.2 µm, 0.3 µm, 0.4 µm, 0.5 µm, 0.6 µm, 0.7 µm, 0.8 µm, 0.9 µm, 1.0 µm, 1.1 µm, 1.2 µm, 1.3 µm, 1.4 µm, 1.5 µm, 1.6 µm, 1.7 µm, 1.8 µm, 1.9 µm, 2.0 µm, 2.1 µm, 2.2 µm, 2.3 µm, 2.4 µm, 2.5 µm, 2.6 µm, 2.7 µm, 2.8 µm, 2.9 µm, 3 µm, or a range composed of any two of the above values.

Specifically, the hard carbon material provided by the present application has a flake-like structure, meaning that in an SEM image of the provided hard carbon material, it can be clearly observed that the hard carbon material has at least one particle with a flake-like structure, and flake-like structure particles can stack with each other. The length and width of the flake-like hard carbon material provided by the present application affect the stacking state of the particles, which in turn influences the mass transfer process of electrochemical reactions. When the length of the flake-like hard carbon material is within the above range, the flake-like hard carbon material, when used alone or in combination with a negative electrode active material such as graphite, can simultaneously come into contact with multiple particles, enhancing electron conductivity and ion conductivity between the particles, thereby accelerating the kinetic process of the battery and improving the rate performance. When the width of the flake-like hard carbon material is within the above range, the processing performance of the material can be improved, enabling the electrode plate to have good adhesion performance, thereby enhancing the cycling stability of the secondary battery. That is, by controlling parameters such as the length and width of the flake-like hard carbon material within the above ranges in the present application, the hard carbon material can have good contact and better processing performance, increasing the compacted density of the battery electrode plate, reducing electrode plate resistance, and thereby improving the energy density of the secondary battery while enhancing the rate performance and cycling performance of the secondary battery.

In some embodiments of the present application, the hard carbon material satisfies at least one of the following conditions:
(1) the length L of the flake-like structure satisfies: 2 µm ≤ L ≤ 15 µm;
(2) the width D1 of the flake-like structure satisfies: 0.5 µm ≤ D1 ≤ 1.9 µm;
(3) a height H1 of the flake-like structure satisfies: 0.02 µm ≤ H1 ≤ 2.5 µm, or 0.05 µm ≤ H1 ≤ 1.9 µm;
(4) a ratio of the length L of the flake-like structure to a height H1 of the flake-like structure satisfies: 2.5 ≤ L/H1 ≤ 750, or 2.5 ≤ L/H1 ≤ 200; or
(5) a ratio of the width D1 of the flake-like structure to a height H1 of the flake-like structure satisfies: 1 ≤ D1/H1 ≤ 12.

In some embodiments of the present application, the length L of the flake-like structure satisfies: 2 µm ≤ L ≤ 15 µm. When the length of the flake-like hard carbon material provided by the present application is within the above range, the flake-like hard carbon material, when used alone or in combination with a negative electrode active material such as graphite, can further come into contact with multiple particles simultaneously, further enhancing electron conductivity and ion conductivity between the particles, thereby accelerating the kinetic process of the battery and further improving rate performance.

In some embodiments of the present application, the width D1 of the flake-like structure satisfies: 0.5 µm ≤ D1 ≤ 1.9 µm. When the width of the flake-like hard carbon material provided by the present application is within the above range, the processing performance of the material can be further improved, enabling the electrode plate to have good adhesion performance, thereby further enhancing the cycling stability of the secondary battery.

In some embodiments of the present application, the height H1 of the flake-like structure satisfies: 0.05 µm ≤ H1 ≤ 2.5 µm. Specifically, the height H1 of the flake-like structure may be 0.05 µm, 0.06 µm, 0.07 µm, 0.08 µm, 0.09 µm, 0.1 µm, 0.15 µm, 0.2 µm, 0.25 µm, 0.3 µm, 0.35 µm, 0.4 µm, 0.45 µm, 0.5 µm, 0.55 µm, 0.6 µm, 0.65 µm, 0.7 µm, 0.75 µm, 0.8 µm, 0.85 µm, 0.9 µm, 1.0 µm, 1.1 µm, 1.2 µm, 1.3 µm, 1.4 µm, 1.5 µm, 1.6 µm, 1.7 µm, 1.8 µm, 1.9 µm, 2 µm, 2.1 µm, 2.2 µm, 2.3 µm, 2.4 µm, 2.5 µm, or a range composed of any two of the above values. Preferably, the height H1 of the flake-like structure satisfies: 0.05 µm ≤ H1 ≤ 1.9 µm. The height of the flake-like hard carbon material provided by the present application being within the above range can impart a certain degree of toughness to the particles, allowing the material to bend to some extent. When the material is used alone or in combination with a negative electrode active material such as graphite, it can come into contact with multiple surfaces of the particles simultaneously, effectively reducing interface impedance and improving the rate performance of the secondary battery.

In some embodiments of the present application, the ratio of the length L of the flake-like structure to the height H1 of the flake-like structure satisfies: 2.5 ≤ L/H1 ≤ 750. Specifically, the ratio of the length L of the flake-like structure to the height H1 of the flake-like structure may be 2.5, 3, 3.3, 4.0, 4.2, 4.5, 5.0, 5.5, 6.0, 7.0, 8.0, 9.0, 10.0, 10.3, 20, 30, 40, 50, 60, 70, 80, 90, 100, 150, 160, 170, 180, 187, 187.5, 190, 200, 210, 220, 225, 230, 240, 250, 260, 300, 400, 500, 600, 700, 750, or a range composed of any two of the above values. Preferably, the ratio of the length L of the flake-like structure to the height H1 of the flake-like structure satisfies: 2.5 ≤ L/H1 ≤ 200. When the ratio of the length L to the height H1 of the flake-like hard carbon material provided by the present application is within the above range, the rate performance of the secondary battery can be further improved.

In some embodiments of the present application, the ratio of the width D1 of the flake-like structure to the height H1 of the flake-like structure satisfies: 1 ≤ D1/H1 ≤ 12. Specifically, the ratio of the width D1 of the flake-like structure to the height H1 of the flake-like structure may be 1, 1.07, 1.13, 1.15, 1.18, 1.2, 1.25, 1.30, 1.35, 1.40, 1.45, 1.50, 1.55, 1.60, 2.0, 3.0, 4.0, 5.0, 6.0, 7.0, 8.0, 9.0, 10.0, 11.0, 11.25, 11.35, 11.45, 11.65, 11.67, 12, or a range composed of any two of the above values. When the ratio of the width D1 to the height H1 of the flake-like hard carbon material provided by the present application is within the above range, the cycling performance and rate performance of the secondary battery can be further improved.

In some embodiments of the present application, the length L of the flake-like structure consists of three parts: a left arc surface length L1, a square region length L2, and a right arc surface length L3, where the relationship L1 + L2 + L3 between the left arc surface length L1, the square region length L2, and the right arc surface length L3 of the flake-like structure satisfies: 2 µm ≤ L1 + L2 + L3 ≤ 16 µm, 0.01 µm ≤ L1 ≤ 1.5 µm, and 10 ≤ L2/L1 ≤ 80. Specifically, the relationship L1 + L2 + L3 of the left arc surface length L1, the square region length L2, and the right arc surface length L3 of the flake-like structure may be 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, or a range composed of any two of the above values. Specifically, the left arc surface length L1 of the flake-like structure may be 0.01 µm, 0.02 µm, 0.03 µm, 0.04 µm, 0.05 µm, 0.06 µm, 0.07 µm, 0.08 µm, 0.09 µm, 0.1 µm, 0.15 µm, 0.2 µm, 0.25 µm, 0.3 µm, 0.35 µm, 0.4 µm, 0.45 µm, 0.5 µm, 0.55 µm, 0.6 µm, 0.65 µm, 0.7 µm, 0.75 µm, 0.8 µm, 0.85 µm, 0.9 µm, 1.0 µm, 1.1 µm, 1.2 µm, 1.3 µm, 1.4 µm, 1.5 µm, or a range composed of any two of the above values. Specifically, the ratio L2/L1 of the square region length L2 to the left arc surface length L1 of the flake-like structure may be 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, or a range composed of any two of the above values. The morphology of the arc surfaces on two sides of the hard carbon material is influenced by synthesis conditions. The arc surface structure affects the stacking state of the flake-like structure. The presence of arc surfaces can alleviate internal stress formed during particle stacking, preventing particle fracture. In addition, the stacking of multiple arc surfaces is likely to form a small number of pores, which can store electrolyte and enhance the wettability of the active material with the electrolyte. By controlling the left arc surface length, square region length, and right arc surface length of the flake-like structure of the hard carbon material in the present application within the above ranges, good contact of the hard carbon material can be achieved, increasing the compacted density of the battery electrode plate, thereby improving the energy density of the secondary battery.

In some embodiments of the present application, the hard carbon material satisfies at least one of the following conditions:
(6) 2 µm ≤ L1 + L2 + L3 ≤ 15 µm;
(7) 0.05 µm ≤ L1 ≤ 1 µm; or
(8) 11 ≤ L2/L1 ≤ 38.

In some embodiments of the present application, the hard carbon material satisfies: 2 µm ≤ L1 + L2 + L3 ≤ 15 µm.

In some embodiments of the present application, the hard carbon material satisfies: 0.05 µm ≤ L1 ≤ 1 µm.

In some embodiments of the present application, the hard carbon material satisfies: 11 ≤ L2/L1 ≤ 38.

By controlling the left arc surface length, square region length, and right arc surface length of the flake-like structure of the hard carbon material in the present application within the above ranges, better contact of the hard carbon material can be further promoted, increasing the compacted density of the battery electrode plate and the energy density of the secondary battery.

In some embodiments of the present application, the hard carbon material satisfies at least one of the following conditions:
(9) 0.8 µm ≤ L2 ≤ 15 µm, or 1.9 µm ≤ L2 ≤ 13 µm; or
(10) 0.05 µm ≤ L3 ≤ 1.5 µm, or 0.05 µm ≤ L3 ≤ 1 µm.

In some embodiments of the present application, the square region length L2 of the flake-like structure satisfies: 0.8 µm ≤ L2 ≤ 15 µm. Specifically, the square region length L2 of the flake-like structure may be 0.8, 0.9, 1.0, 1.5, 1.9, 2.0, 2.5, 3.0, 3.5, 4.0, 4.5, 4.6, 4.7, 4.8, 4.9, 5.0, 5.5, 6.0, 6.5, 6.6, 7.0, 7.5, 7.6, 8.0, 8.5, 9.0, 10.0, 10.4, 10.5, 11, 11.5, 12.0, 12.5, 13.0, 14.0, 15.0, or a range composed of any two of the above values. Preferably, the square region length L2 of the flake-like structure satisfies: 1.9 µm ≤ L2 ≤ 13 µm. With the length L2 of the material controlled within the above range, the material, when used alone or in combination with a negative electrode active material such as graphite, can come into contact with multiple particles simultaneously, enhancing electron conductivity and ion conductivity between the particles, thereby accelerating the kinetic process of battery and improving rate performance.

In some embodiments of the present application, the right arc surface length L3 of the flake-like structure satisfies: 0.05 µm ≤ L3 ≤ 1.5 µm. Specifically, the right arc surface length L3 of the flake-like structure may be 0.05 µm, 0.1 µm, 0.2 µm, 0.3 µm, 0.4 µm, 0.5 µm, 0.6 µm, 0.7 µm, 0.8 µm, 0.9 µm, 1.0 µm, 1.1 µm, 1.2 µm, 1.3 µm, 1.4 µm, 1.5 µm, or a range composed of any two of the above values. Preferably, the right arc surface length L3 of the flake-like structure satisfies: 0.05 µm ≤ L3 ≤ 1 µm. The presence of the arc surface structure can alleviate internal stress formed during particle stacking, preventing particle fracture. In addition, the stacking of multiple arc surfaces is likely to form a small number of pores, which can store electrolyte and enhance the wettability of the active material with the electrolyte.

In some embodiments of the present application, a closed-pore volume of the flake-like structure is 0.01-0.4 cm³/g. Specifically, the closed-pore volume of the flake-like structure may be 0.01 cm³/g, 0.02 cm³/g, 0.03 cm³/g, 0.04 cm³/g, 0.05 cm³/g, 0.06 cm³/g, 0.07 cm³/g, 0.08 cm³/g, 0.09 cm³/g, 0.1 cm³/g, 0.12 cm³/g, 0.15 cm³/g, 0.2 cm³/g, 0.21 cm³/g, 0.24 cm³/g, 0.25 cm³/g, 0.28 cm³/g, 0.3 cm³/g, 0.35 cm³/g, 0.4 cm³/g, or a range composed of any two of the above values. Preferably, the closed-pore volume of the flake-like structure is 0.05-0.28 cm³/g. An increase in the closed-pore count in the hard carbon material helps store more active metal ions, thereby increasing the storage capacity of active metal ions. However, excessive closed pores reduce the particle density and pose a risk of pore enlargement, which is detrimental to energy storage. By controlling the closed-pore volume of the hard carbon material within the above range in the present application, higher capacity of the hard carbon material can be achieved, and the active material can have a lower energy storage platform, thereby improving the energy density of the secondary battery.

In some embodiments of the present application, the hard carbon material satisfies at least one of the following conditions:
(11) a surface of the flake-like structure further includes a carbon coating layer;
(12) a surface of the flake-like structure further includes a carbon coating layer, where a thickness of the carbon coating layer ranges from 20-100 nm;
(13) the flake-like structure contains a first element, where the first element includes at least one of Li, Na, K, Rb, Mg, Ca, or Zn;
(14) the flake-like structure contains a first element, where the first element includes at least one of Li, Na, K, Rb, Mg, Ca, or Zn, and a percentage of the first element relative to a total mass of the hard carbon material is 0.01%-0.9%;
(15) a specific surface area of the flake-like material ranges from 2-28 m²/g; or
(16) an ID/IG value of the flake-like material is 1.0-1.3.

In some embodiments of the present application, in the hard carbon material, the surface of the flake-like structure further includes the carbon coating layer. Applying the carbon layer on the surface of the hard carbon helps reduce surface defects and reduce exposure of the flake-like pore structure, improving the initial Coulombic efficiency of the negative electrode active material, and enabling the negative electrode active material to have a high reversible capacity, thereby enhancing the energy density and cycling stability of the secondary battery.

In some embodiments of the present application, in the hard carbon material, the surface of the flake-like structure further includes the carbon coating layer, where the thickness of the carbon coating layer ranges from 20-100 nm. Specifically, the thickness of the carbon coating layer may be 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, 100 nm, or a range composed of any two of the above values. Applying the carbon layer on the surface of the hard carbon material and controlling the thickness of the carbon coating layer within the above range help further reduce surface defects and further reduce exposure of flake-like pore structures, further improving the initial Coulombic efficiency of the negative electrode active material, and enabling the negative electrode active material to have a high reversible capacity, thereby enhancing the energy density and cycling stability of the secondary battery.

In some embodiments of the present application, in the hard carbon material, the flake-like structure contains the first element, where the first element includes at least one of Li, Na, K, Rb, Mg, Ca, or Zn. Introducing the first element into the flake-like structure of the hard carbon material can induce the storage of active metal ions in the hard carbon material, increasing the storage capacity of active metal ions.

In some embodiments of the present application, in the hard carbon material, the flake-like structure contains the first element, where the first element includes at least one of Li, Na, K, Rb, Mg, Ca, or Zn, and the percentage of the first element relative to the total mass of the hard carbon material is 0.01%-0.9%. Specifically, the percentage of the first element relative to the total mass of the hard carbon material may be 0.01%, 0.02%, 0.03%, 0.04%, 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, 0.23%, 0.34%, 0.35%, 0.4%, 0.5%, 0.6%, 0.7%, 0.75%, 0.78%, 0.8%, 0.85%, 0.9%, or a range composed of any two of the above values. By controlling the percentage of the first element in the hard carbon material within the above range in the present application, the storage of active metal ions in the hard carbon material can be further induced, further increasing the storage capacity of active metal ions. Applying the hard carbon material of the present application to a secondary battery can help increase the gram capacity of the negative electrode of the battery, thereby improving the energy density of the secondary battery. In some embodiments of the present application, in the hard carbon material, the specific surface area of the flake-like material ranges from 2-28 m²/g. Specifically, the specific surface area of the flake-like material may be 2 m²/g, 3 m²/g, 4 m²/g, 5 m²/g, 6 m²/g, 7 m²/g, 8 m²/g, 9 m²/g, 10 m²/g, 11 m²/g, 12 m²/g, 13 m²/g, 14 m²/g, 15 m²/g, 16 m²/g, 17 m²/g, 18 m²/g, 19 m²/g, 20 m²/g, 21 m²/g, 22 m²/g, 23 m²/g, 24 m²/g, 25 m²/g, 26 m²/g, 27 m²/g, 28 m²/g, or a range composed of any two of the above values. An excessively large specific surface area of the hard carbon material causes active metal ions to adsorb on the material's surface, consuming more electrolyte to form a stable SEI layer, and leading to a decrease in the initial Coulombic efficiency of the material. By controlling the specific surface area of the hard carbon material within the above range in the present application, excessive electrolyte consumption can be avoided while ensuring the formation of a stable SEI, enabling the hard carbon material to have a higher reversible capacity and higher initial Coulombic efficiency, thereby improving the energy density and cycling stability of the secondary battery.

In some embodiments of the present application, in the hard carbon material, the ID/IG value of the flake-like structure is 1.0-1.3. Specifically, the ID/IG value of the flake-like structure may be 1.0, 1.01, 1.02, 1.03, 1.04, 1.05, 1.06, 1.07, 1.08, 1.09, 1.1, 1.13, 1.15, 1.16, 1.2, 1.23, 1.25, 1.27, 1.3, or a range composed of any two of the above values. ID represents the peak area of peak D in the Raman spectrum of the hard carbon material, and IG represents the peak area of peak G in the Raman spectrum of the hard carbon material. By controlling the ID/IG value of the hard carbon material provided by the present application within the above range, the hard carbon material has an appropriate degree of defects, further promoting ion adsorption and bonding while reducing irreversible capacity loss caused by high defect levels, thereby facilitating an increase in the gram capacity of the hard carbon material.

According to a second aspect of the present application, the present application provides a negative electrode plate, where the negative electrode plate includes a negative electrode current collector and a negative electrode active material layer disposed on at least one surface of the negative electrode current collector, the negative electrode active material layer includes a negative electrode active material, and the negative electrode active material includes any one of the hard carbon materials according to the first aspect of the present application. The negative electrode plate containing the above hard carbon material has high capacity, good interfacial adhesion, and high compacted density. When applied to a secondary battery, it can increase the energy density of the secondary battery while improving the cycling performance and rate performance of the secondary battery.

In some embodiments of the present application, the negative electrode active material includes any one of the hard carbon materials according to the first aspect of the present application and a graphite material. Typically, graphite has a high compacted density, but the graphite has a low gram capacity and poor rate performance. The hard carbon material has a high gram capacity but a relatively low compacted density. Compounding the hard carbon material with the graphite material in the present application offers a negative electrode material with both high capacity and high compacted density, and offers a negative electrode active material layer with both high capacity and high compacted density. Ordinary granular hard carbon is not conducive to compounding hard carbon materials with negative electrode active materials such as graphite, whereas the flake-like hard carbon material provided by the present application increases contact between hard carbon particles and between hard carbon and graphite particles, facilitating a reduction in electrode plate resistance and further improving the rate performance of the negative electrode active material.

In some embodiments of the present application, the negative electrode active material includes any one of the hard carbon materials according to the first aspect of the present application and the graphite material, and based on a total mass of the negative electrode active material, a mass percentage of the hard carbon material is 0.1% to 99.9%. Specifically, based on the total mass of the negative electrode active material, the mass percentage of the hard carbon material may be 0.1%, 0.5%, 1.0%, 5.0%, 10.0%, 15.0%, 20.0%, 25.0%, 30.0%, 35.0%, 40.0%, 45.0%, 50.0%, 55.0%, 60.0%, 65.0%, 70.0%, 75.0%, 80.0%, 85.0%, 90.0%, 95.0%, 99.9%, or a range composed of any two of the above values. In the present application, by controlling the relative proportion of the flake-like hard carbon and graphite in the compounded electrode plate and adjusting the mass percentage of the hard carbon material in the negative electrode active material layer within the range of the present application, the compacted density of the negative electrode active material layer can be optimized, thereby improving the energy density, rate performance, and cycle retention rate of the secondary battery.

In some embodiments of the present application, the compacted density of the negative electrode active material layer ranges from 1.0-1.9 g/cm³. Specifically, the compacted density of the negative electrode active material layer may be 1.0 g/cm³, 1.05 g/cm³, 1.1 g/cm³, 1.15 g/cm³, 1.2 g/cm³, 1.25 g/cm³, 1.3 g/cm³, 1.35 g/cm³, 1.4 g/cm³, 1.45 g/cm³, 1.5 g/cm³, 1.55 g/cm³, 1.6 g/cm³, 1.65 g/cm³, 1.7 g/cm³, 1.75 g/cm³, 1.8 g/cm³, 1.85 g/cm³, 1.90 g/cm³, or a range composed of any two of the above values. By controlling the compacted density of the negative electrode active material layer within the above range, the amount of the negative electrode active material per unit area can be increased, thereby improving the energy density of the secondary battery.

According to a third aspect of the present application, the present application provides a secondary battery, which includes the negative electrode plate provided by any one of the embodiments of the second aspect of the present application. The secondary battery containing the above negative electrode plate has a high energy density and good cycling performance.

The secondary battery of the present application further includes a positive electrode plate. The present application imposes no particular restrictions on the positive electrode plate, as long as it can achieve the purpose of the present application. For example, the positive electrode plate includes a positive electrode current collector and a positive electrode active material layer disposed on at least one surface of the positive electrode current collector. For example, the positive electrode current collector may include a metal foil or a composite current collector. For example, the metal foil may be aluminum foil. In some embodiments, the secondary battery is a lithium-ion battery, and the positive electrode active material may include lithium transition metal oxide, and lithium transition metal oxide includes but not limited to at least one of lithium iron phosphate, lithium-rich manganese-based materials, lithium cobalt oxide (LiCoO₂), lithium manganese iron phosphate, or lithium titanate.

The present application imposes no particular restrictions on the thickness of the positive electrode current collector and the positive electrode active material layer, as long as they can achieve the purpose of the present application. For example, the thickness of the positive electrode current collector is 5 µm to 20 µm, preferably 6 µm to 18 µm.

The secondary battery of the present application further includes an electrolyte. In one embodiment, the electrolyte includes a lithium salt and a non-aqueous solvent. The present application imposes no particular restrictions on the concentration of the lithium salt in the electrolyte, as long as it can achieve the purpose of the present application. The secondary battery of the present application further includes a separator for separating the positive electrode plate and the negative electrode plate, preventing internal short circuits in the secondary battery, allowing electrolyte ions to pass freely, and not affecting the electrochemical charge-discharge process. The present application imposes no particular restrictions on the separator, as long as it can achieve the purpose of the present application. For example, the material of the separator may include but is not limited to at least one of polyolefin (PO) separators mainly composed of polyethylene (PE), polypropylene (PP), or polytetrafluoroethylene, polyester films (for example, polyethylene terephthalate (PET) films), cellulose films, polyimide films (PI), polyamide films (PA), spandex films, or aramid films.

The secondary battery of the present application further includes a packaging bag for containing the positive electrode plate, separator, negative electrode plate, and electrolyte, as well as other components known in the art in the secondary battery, which are not limited by the present application. The present application imposes no particular restrictions on the packaging bag, which can be any packaging bag known in the art, as long as it can achieve the purpose of the present application. For example, an aluminum-plastic film packaging bag may be used.

The secondary battery of the present application is not particularly limited and may include any device where an electrochemical reaction occurs. In one embodiment of the present application, the secondary battery may include but is not limited to lithium-ion batteries, sodium-ion batteries, lithium polymer secondary batteries, or lithium-ion polymer secondary batteries.

According to a fourth aspect of the present application, the present application provides an electronic apparatus, which includes the secondary battery provided by any one of the embodiments of the third aspect of the present application. The electronic apparatus containing the above secondary battery has a long service life.

The electronic apparatus of the present application is not particularly limited and may be any electronic apparatus known in the prior art. In some embodiments, the electronic apparatus may include but is not limited to notebook computers, pen-input computers, mobile computers, e-book readers, portable phones, portable fax machines, portable copiers, portable printers, headsets, video recorders, LCD televisions, portable cleaners, portable CD players, mini-disc players, transceivers, electronic notebooks, calculators, memory cards, portable recorders, radios, backup power supplies, motors, automobiles, motorcycles, electric bicycles, bicycles, lighting fixtures, toys, gaming consoles, clocks, power tools, flashlights, cameras, large household batteries, or lithium-ion capacitors.

### Examples

Examples and comparative examples are provided to more specifically illustrate the embodiments of the present application. Various tests and evaluations are conducted according to the methods described below. Unless otherwise specified, "parts" and "%" are based on mass.

The test methods used in the following examples and comparative examples are as follows:

### 1. Scanning electron microscopy (SEM) test

The microstructure of the prepared hard carbon material was observed using a scanning electron microscope (instrument model: ZEISS SEM), and SEM images were captured. The measurement function of the scanning electron microscope was used to measure the length (L), width (D1), height/thickness (H1), left arc surface length (L1), square region length (L2), and right arc surface length (L3) of each structure in the microstructure of the hard carbon material. The specific test steps were as follows: The measurement function of the scanning electron microscope was utilized to measure the parameters of individual flake-like particle, and the relevant parameters of ten flake-like particles were recorded. The final length (L), width (D1), height/thickness (H1), left arc surface length (L1), square region length (L2), and right arc surface length (L3) of particle were calculated as the average values of the ten particles. For cross-sectional testing, a smooth cross-section was cut using an ion polisher (instrument model: IB-09010CP), followed by SEM imaging. The ion polishing principle involved ionizing argon gas in a vacuum environment, accelerating and focusing it, and using high-speed argon ions to knock out atoms or molecules from the sample surface to achieve ion polishing. The height of the hard carbon material was measured through cross-sectional testing of the hard carbon particles.

### 2. Transmission electron microscopy (TEM) test

The carbon coating layer of the hard carbon material was observed using a transmission electron microscope (FEI Tecnai F20), TEM images were captured, and the thickness of the carbon coating layer of the hard carbon material was measured.

### 3. Metal element analysis test

The sample was digested using a microwave digestion system (model: CEM-Mars5), and the element content was quantitatively tested using an ICP-OES instrument (instrument model: PE7000DV). After the sample was digested into a solution with acid, the liquid sample was introduced into the nebulization chamber, where it formed an aerosol under the action of the carrier gas and was injected into the plasma through the central tube. The sample was fully evaporated, dissociated, atomized, ionized, and excited, emitting characteristic spectral lines of the elements. Qualitative analysis was performed based on the wavelength of the spectral lines, and quantitative analysis was conducted based on the intensity of the spectral lines being proportional to the concentration.

### 4. Small-angle X-ray scattering test

The scattering vector changes of the sample in the scattering intensity range of 0.01 nm - 1 to 0.7 nm - 1 were tested using a small-angle X-ray scattering structure analyzer (instrument model: Nano-inXider), and the closed-pore volume in the hard carbon material particles was analyzed by fitting.

### 5. Test for specific surface area and pore volume

Hard carbon material powder was taken in a sample tube and degassed under vacuum at 100°C for 12 h. The adsorption amounts of nitrogen by the hard carbon material under different pressures were tested using an ASAP2460 physical adsorption analyzer, and adsorption and desorption isotherms were plotted. The shape of the hysteresis loop was used to determine the pore shape, the DFT model was used to fit the pore size distribution curve of micropores, and the specific surface area of the hard carbon material was calculated.

### 6. Raman test

The Raman spectrum of the hard carbon material was tested using a Raman spectrometer. A range of 200 µm × 500 µm was selected in the test, and more than 200 points were tested at equal intervals within this range, with the test range for each point being 1000 cm⁻¹ to 2000 cm⁻¹. The peak appearing between 1320 cm⁻¹ and 1370 cm⁻¹ was recorded as the D peak, and the peak appearing between 1570 cm⁻¹ and 1620 cm⁻¹ was recorded as the G peak. The intensity ratio of ID/IG for each point was calculated, and the average value of multiple points was taken as the final ID/IG intensity ratio.

### 7. Test for compacted density of negative electrode active material layer

A fully discharged lithium-ion battery was taken, and the negative electrode plate was disassembled, cleaned, and dried. The negative electrode plate with an area of S was weighed using an electronic balance, with the weight recorded as W1, and the thickness T1 of the negative electrode plate was measured using a micrometer. The negative electrode active material layer was washed off using the solvent DMC and dried, and the weight of the negative electrode current collector was measured and recorded as W2, with the thickness of the negative electrode current collector measured using a micrometer and recorded as T2. The weight WO and thickness T0 of the negative electrode active material layer on one side of the negative electrode current collector, as well as the compacted density of the negative electrode active material layer, were calculated using the following formulas: WO = W1 - W2, T0 = T1 - T2, and compacted density = WO/(T0 × S).

### 8. Test for total gram capacity for lithium storage and initial efficiency of negative electrode active material

The initial reversible gram capacity of the negative electrode active material in the range of 0 V to 2.5 V was obtained through the following test method: A single-sided coated negative electrode plate was cut into a 14 mm diameter disc to serve as the working electrode, a lithium metal disc was used as the counter electrode, a porous polyethylene film (provided by Celgard) was used as the separator, and a button cell was obtained through assembly after the electrolyte was injected. The button cell was discharged to 0 V at three stages of small currents of 0.05C, 0.01C, and 0.005C, and the initial discharge capacity of the button cell was recorded. Then, the button cell was charged at a constant current of 0.1C to 2.5 V, and the initial charge capacity of the button cell was recorded. Initial efficiency=initial charge capacity/initial discharge capacity × 100%. Initial reversible gram capacity of negative electrode active material at 0 V to 2.5 V, that is, total gram capacity for lithium storage=initial charge capacity/mass of negative electrode active material, with the unit being mAh/g.

The electrolyte included a base solvent and a lithium salt. The base solvent was obtained by mixing ethylene carbonate (EC) and diethyl carbonate (DEC) at a mass ratio of 1:1, and the lithium salt was LiPF₆, with the concentration of the lithium salt being 1 mol/L. The total gram capacity for lithium storage and initial efficiency tests for the comparative examples were conducted using the same methods as the total gram capacity for lithium storage and initial efficiency test for the hard carbon material.

### 9. Energy density (ED) test

In an environment of 25°C, the lithium-ion battery was charged at a constant current of 0.2C to a voltage of 4.48 V or 3.95 V, then charged at constant voltage, and discharged at a constant current of 0.2C to a voltage of 2 V. This was recorded as one cycle, and the discharge capacity C and discharge energy E of the first cycle were recorded. The length, width, and height of the battery at 50% state of charge were measured to obtain the battery volume Vm, and the energy density ED was calculated as E/Vm. The lithium-ion battery was subjected to 500 cycles of the above charge-discharge process, the discharge capacity C1 after 500 cycles was tested, and the cycle capacity retention rate was calculated as C1/C.

### 10. Test method for rate performance

The lithium-ion battery was subjected to rate charging at a constant temperature. A fully discharged lithium-ion battery was first charged at a constant current of 1C to 4.48 V, charged at constant voltage to 0.05C, and then discharged at a constant current of 1C to 3.0 V. The obtained discharge capacity was recorded as capacity A. Then, it was charged at a constant current of 5C to 4.48 V, charged at constant voltage to 0.05C, and then discharged at a constant current of 1C to 3.0 V. The obtained discharge capacity was recorded as capacity B. The 5C/1C rate performance was calculated as B/A.

### Example 1-1

### <Preparation of negative electrode active material>

Stearic acid flake dispersion: 100 g of polyoxyethylene polypropylene ether was weighed and dispersed in 10 L of water, and the dispersion was stirred at 80°C for 2 h until the polyoxyethylene polypropylene ether was completely dispersed. Subsequently, 75 g of stearic acid melt was added, and then these substances were stirred for 3 h until a microemulsion was formed. The resulting microemulsion was left standing at room temperature for 24 h to obtain a stearic acid flake dispersion for use. Then, 50 g of resorcinol and 66 g of formaldehyde were weighed, and stirred slowly at room temperature to dissolve in 1000 mL of water, and 1000 mL of the stearic acid flake dispersion was added, followed by 1.5 g of propylamine. After stirring for 30 min, 5 mL of 1.5 mol/L ammonia solution was added, the temperature was raised to 85°C, and then these substances were stirred for 4 h. The resulting powder product was centrifuged, filtered, washed with water, and dried to serve as a precursor. Resin curing was performed by placing the powder product in a temperature-programmed oven under an inert atmosphere, with the heating program set as 90°C/1h + 110°C/1h + 130°C/1h + 150°C/1h to ensure full curing of the resin. Precursor mixing was conducted by weighing 100 g of the cured powder product and 10 g of NaOH, and mixing the two precursors to uniformity by using a mixer. Carbonization was performed by placing the precursors mixed to uniformity in a rotary furnace, heating them at a temperature rise speed of 5°C/min to a primary calcination temperature T₁ = 900°C, carbonizing them for 2 h, and cooling. A carbonized material was obtained after cooling. Acid washing and water washing were performed by washing the collected powder with 1M hydrochloric acid for 12 h, filtering, washing the residue with deionized water for 12 h, filtering, and drying the residue. A coating layer was formed on the surface by transferring the dried powder to a nitrogen atmosphere protection furnace, heating it at a temperature rise speed of 5°C/min to a vapor deposition temperature T₃ = 900°C, and then switching the gas atmosphere to a mixture of reducing gas methane and argon, with a vapor deposition time t₃ = 2 h. After vapor deposition, the mixed gas was stopped, switched to nitrogen, and cooled to room temperature to obtain the hard carbon material, that is, the negative electrode active material. Based on the mass of the mixed gas, the mass percentage of the reducing gas methane was 10%.

### <Preparation of negative electrode plate>

The hard carbon material prepared above was mixed with a binder styrene-butadiene rubber and a thickener sodium carboxymethyl cellulose at a mass ratio of 97:1.5:1.5, deionized water was added as a solvent to prepare a negative electrode slurry with a solid content of 40 wt%, and the mixture was stirred to uniformity. The negative electrode slurry was evenly applied on one surface of a 6 µm thick negative electrode current collector copper foil. The copper foil was dried at 85°C for 4 h to obtain a negative electrode plate coated with a negative electrode active material layer of a coating thickness of 50 µm on one side, followed by cold pressing, cutting, slitting, and drying at 120°C under vacuum for 12 h, to obtain a negative electrode plate.

### <Preparation of positive electrode plate>

A positive electrode active material lithium cobalt oxide, a conductive agent conductive carbon black (Super P), and a binder PVDF were mixed at a mass ratio of 97:1.4:1.6, N-methylpyrrolidone (NMP) was added as a solvent, and the foregoing substances were stirred to uniformity to prepare a positive electrode slurry with a solid content of 72 wt%. The positive electrode slurry was evenly applied on one surface of a 13 µm thick positive electrode current collector aluminum foil, and dried at 85°C to obtain a positive electrode plate coated with a positive electrode active material on one side, where the positive electrode active material layer had a thickness of 80 µm, followed by cold pressing, cutting, slitting, and drying at 85°C under vacuum for 4 h, to obtain a positive electrode plate.

### <Preparation of electrolyte>

In a dry argon atmosphere glovebox, base solvents ethylene carbonate (EC), propylene carbonate (PC), and diethyl carbonate (DEC) were mixed at a mass ratio of EC:PC:DEC = 1:1:1. Then 1,3-propane sultone, fluoroethylene carbonate, and succinonitrile were added, dissolved, and thoroughly stirred. A lithium salt LiPF₆ was then added, and the foregoing substances were mixed to uniformity to obtain an electrolyte. Based on the mass of the electrolyte, a mass percentage of the lithium salt was 12.5%, and mass percentages of 1,3-propane sultone, fluoroethylene carbonate, and succinonitrile were each 2%.

### <Preparation of separator>

A 7 µm thick polyethylene film was used as the separator.

### <Preparation of lithium-ion battery>

The prepared positive electrode plate, separator, and negative electrode plate were stacked in order, with the separator placed between the positive electrode plate and the negative electrode plate to provide separation, and then wound to obtain an electrode assembly. After tab welding, the electrode assembly was placed in an aluminum-plastic film packaging bag, placed in a vacuum oven at 80°C for 12 h drying to remove moisture, injected with the prepared electrolyte, and subjected to vacuum sealing, standing, formation, degassing, shaping, and other processes to obtain a lithium-ion battery.

### Example 1-2

Based on Example 1-1, the amount of stearic acid flake dispersion added was adjusted to 500 mL. The remaining steps and parameters of Example 1-2 were the same as those of Example 1-1.

### Example 1-3

Based on Example 1-1, the amount of stearic acid flake dispersion added was adjusted to 1500 mL. The remaining steps and parameters of Example 1-3 were the same as those of Example 1-1.

### Example 1-4

Based on Example 1-1, the amount of stearic acid flake dispersion added was adjusted to 2000 mL. The remaining steps and parameters of Example 1-4 were the same as those of Example 1-1.

### Example 1-5

100 g of polyvinylidene chloride (PVDC) powder and 10 g of LiOH were weighed, and the two precursors were mixed to uniformity by using a mixer. The precursors mixed to uniformity were placed in a rotary furnace, heated at a temperature rise speed of 5°C/min to a primary calcination temperature T₁ = 900°C, carbonized for 2 h, and cooled. A carbonized material was obtained after cooling. The collected powder was washed with 1M hydrochloric acid for 12 h, and filtered, and the residue was washed with deionized water for 12 h, filtered, and dried. The dried powder was transferred to a nitrogen atmosphere protection furnace, and heated at a temperature rise speed of 5°C/min to a vapor deposition temperature T₃ = 900°C. Then the gas atmosphere was switched to a mixture of reducing gas methane and argon, with a vapor deposition time t₃ = 2 h. After vapor deposition, the mixed gas was stopped, switched to nitrogen, and cooled to room temperature to obtain the hard carbon material, that is, the negative electrode active material. Based on the mass of the mixed gas, the mass percentage of the reducing gas methane was 10%.

### Example 1-6

Based on Example 1-5, the precursor was replaced with 100 g of polyvinylidene chloride powder and 10 g of NaOH. The remaining parameters of Example 1-6 were the same as those of Example 1-5.

### Example 1-7

Based on Example 1-5, the precursor was replaced with 100 g of polyvinylidene chloride powder and 10 g of KOH. The remaining parameters of Example 1-7 were the same as those of Example 1-5.

### Example 1-8

Based on Example 1-5, the precursor was replaced with 100 g of polyvinylidene chloride powder and 10 g of RbOH. The remaining parameters of Example 1-8 were the same as those of Example 1-5.

### Example 1-9

Based on Example 1-2, during the preparation of the stearic acid flake dispersion, the amount of stearic acid melt added was adjusted to 1 g. The remaining steps and parameters of Example 1-9 were the same as those of Example 1-2.

### Example 1-10

Based on Example 1-2, during the preparation of the stearic acid flake dispersion, the amount of stearic acid melt added was adjusted to 15 g. The remaining steps and parameters of Example 1-10 were the same as those of Example 1-2.

### Example 1-11

Based on Example 1-2, during the resin prepolymerization process, the amount of resorcinol was adjusted to 25 g, the amount of formaldehyde was adjusted to 33 g, and the amount of ammonia solution added was adjusted to 10 mL. The remaining steps and parameters of Example 1-11 were the same as those of Example 1-2.

### Example 1-12

Based on Example 1-2, during the resin prepolymerization process, the amount of resorcinol was adjusted to 75 g, the amount of formaldehyde was adjusted to 99 g, and the amount of ammonia solution added was adjusted to 2 mL. The remaining steps and parameters of Example 1-12 were the same as those of Example 1-2.

### Example 1-13

Based on Example 1-2, during the precursor mixing process, the amount of NaOH was adjusted to 2 g. The remaining steps and parameters of Example 1-13 were the same as those of Example 1-2.

### Example 1-14

Based on Example 1-2, during the precursor mixing process, the amount of NaOH was adjusted to 20 g. The remaining steps and parameters of Example 1-14 were the same as those of Example 1-2.

### Comparative Example 1-1

The polyvinylidene chloride powder used in Example 1-5 was replaced with coconut shell. 100 g of coconut shell and 10 g of NaOH were mixed and placed in a rotary furnace with a liner for direct carbonization. The remaining subsequent steps were the same as those of Example 1-5.

### Comparative Example 1-2

Commercially purchased artificial graphite was heated in a rotary furnace under 10% C₂H₂ gas to 700°C, and maintained at that temperature for 2 h. Then the gas was switched to N₂ gas, and cooled naturally to obtain the final graphite material.

### Comparative Example 1-3

Based on Example 1-2, the steps of adding stearic acid flake dispersion, propylamine, and ammonia solution were omitted. That is, 50 g of resorcinol and 66 g of formaldehyde were weighed, stirred slowly at room temperature to dissolve in 1000 mL of water, heated to 85°C, and stirred for 4 h. The remaining subsequent steps were the same as those of Example 1-2.

### Comparative Example 1-4

Based on Example 1-2, the stearic acid flake dispersion was replaced with stearic acid. That is, 50 g of resorcinol and 66 g of formaldehyde were weighed, and stirred slowly at room temperature to dissolve in 1000 mL of water. Then 1000 mL of stearic acid was added (stearic acid was directly added to water and stirred to disperse, and then the dispersion was added), followed by 1.5 g of propylamine. After stirring for 30 min, 5 mL of 1.5 mol/L ammonia solution was added, with the temperature raised to 85°C. These substances were stirred for 4 h. The remaining subsequent steps were the same as those of Example 1-2.

### Example 2-1

### <Preparation of negative electrode active material>

Commercially purchased artificial graphite was heated in a rotary furnace under 10% C₂H₂ gas to 700°C, and maintained at that temperature for 2 h. Then, the gas was switched to N₂ gas, and cooled naturally to obtain the final graphite material.

### <Preparation of negative electrode plate>

The hard carbon material prepared in Example 1-2 was mixed with the graphite material prepared in Example 2-1 at a mass ratio of 10:90 to obtain the negative electrode active material. The prepared negative electrode active material was mixed with the binder styrene-butadiene rubber and the thickener sodium carboxymethyl cellulose at a mass ratio of 97:1.5:1.5, deionized water was added as a solvent to prepare a negative electrode slurry with a solid content of 40 wt%, and the substances were stirred to uniformity. The negative electrode slurry was evenly applied on one surface of a 6 µm thick negative electrode current collector copper foil, and the copper foil was dried at 85°C for 4 h to obtain a negative electrode plate coated with a negative electrode active material layer of a coating thickness of 50 µm on one side, followed by cold pressing, cutting, and slitting, and drying at 120°C under vacuum for 12 h to obtain a negative electrode plate.

The remaining steps for <preparation of positive electrode plate>, <preparation of electrolyte>, <preparation of separator>, and <preparation of lithium-ion battery> were the same as those in Example 1-1.

### Examples 2-2 to 2-5

Except for the preparation parameters adjusted according to Table a, all parameters of Examples 2-2 to 2-5 were the same as those of Example 2-1.

### Comparative Examples 2-1 to 2-5

Based on Example 2-1, the difference from Example 2-1 was that the hard carbon material used was the hard carbon material prepared in Comparative Example 1-1, and the ratio of the hard carbon material and graphite was adjusted according to Table a. The remaining steps were the same as those of Example 2-1.

**Table a**

| Group | Mass percentage of hard carbon | Mass percentage of graphite |
|---|---|---|
| Example 2-1 | 10% | 90% |
| Example 2-2 | 30% | 70% |
| Example 2-3 | 50% | 50% |
| Example 2-4 | 70% | 30% |
| Example 2-5 | 90% | 10% |
| Comparative Example 2-1 | 10% | 90% |
| Comparative Example 2-2 | 30% | 70% |
| Comparative Example 2-3 | 50% | 50% |
| Comparative Example 2-4 | 70% | 30% |
| Comparative Example 2-5 | 90% | 10% |

### Effect Example 1

With the test methods described above, the relevant parameters and performance of the materials prepared in Examples 1-1 to 1-14 and Comparative Examples 1-1 to 1-4 were further tested, with the results shown in Table 1:

**Table 1**

| Group | L (µm) | L1 (µm) | L2 | L3 | L2/L1 | D1 (µm) | H1 (µm) | L/H1 | D1/H1 | Coating layer (nm) | First element type | First element content | Closed-pore volume (cm³g) ^{CY}) | Specific surface area (cm²/g) | ID/IG | Gram capacity (mAh/g) | Initial efficiency |
|---|---|---|---|---|---|---|---|---|---|---|---|---|---|---|---|---|---|
| Example 1-1 | 12 | 0.8 | 10.4 | 0.8 | 13 | 0.7 | 0.06 | 200.0 | 11.67 | 26 | Na | 0.06% | 0.28 | 2 | 1.05 | 823 | 89% |
| Example 1-2 | 15 | 1 | 13.0 | 1 | 13 | 0.9 | 0.08 | 187.5 | 11.25 | 30 | Na | 0.06% | 0.25 | 5 | 1.03 | 720 | 88% |
| Example 1-3 | 8 | 0.6 | 6.8 | 0.8 | 11 | 0.5 | 0.05 | 160.0 | 10.00 | 24 | Na | 0.04% | 0.15 | 8 | 1.06 | 687 | 87% |
| Example 1-4 | 5 | 0.3 | 4.4 | 0.2 | 15 | 0.5 | 0.05 | 100.0 | 10.00 | 21 | Na | 0.01% | 0.12 | 10 | 1.07 | 664 | 86% |
| Example 1-5 | 8 | 0.2 | 7.6 | 0.2 | 38 | 1.9 | 1.9 | 4.2 | 1.00 | 95 | Li | 0.90% | 0.05 | 28 | 1.27 | 637 | 86% |
| Example 1-6 | 5 | 0.2 | 4.6 | 0.2 | 23 | 1.6 | 1.5 | 3.3 | 1.07 | 88 | Na | 0.60% | 0.21 | 17 | 1.16 | 680 | 87% |
| Example 1-7 | 5 | 0.3 | 4.4 | 0.2 | 15 | 1.6 | 1 | 5.0 | 1.60 | 83 | K | 0.40% | 0.24 | 13 | 1.13 | 711 | 88% |
| Example 1-8 | 2 | 0.05 | 1.9 | 0.05 | 38 | 0.9 | 0.8 | 2.5 | 1.13 | 67 | Rb | 0.10% | 0.08 | 22 | 1.23 | 653 | 86% |
| Example 1-9 | 15 | 1 | 13 | 1 | 13 | 3 | 2.5 | 6.0 | 1.20 | 30 | Na | 0.12% | 0.25 | 5 | 1.03 | 563 | 86% |
| Example 1-10 | 15 | 1 | 13 | 1 | 13 | 0.1 | 0.02 | 750.0 | 5.00 | 30 | Na | 0.03% | 0.18 | 5 | 1.05 | 583 | 84% |
| Example 1-11 | 0.82 | 0.01 | 0.8 | 0.01 | 80 | 0.9 | 0.08 | 10.3 | 11.25 | 30 | Na | 0.06% | 0.25 | 5 | 1.03 | 631 | 85% |
| Example 1-12 | 18 | 1.5 | 15 | 1.5 | 10 | 0.9 | 0.08 | 225.0 | 11.25 | 30 | Na | 0.06% | 0.25 | 5 | 1.03 | 618 | 85% |
| Example 1-13 | 15 | 1 | 13 | 1 | 13 | 0.9 | 0.08 | 187.5 | 11.25 | 30 | Na | 0.06% | 0.01 | 5 | 1.03 | 559 | 86% |
| Example 1-14 | 15 | 1 | 13 | 1 | 13 | 0.9 | 0.08 | 187.5 | 11.25 | 30 | Na | 0.06% | 0.40 | 5 | 1.03 | 621 | 86% |
| Comparative Example 1-1 | / | / | / | / | / | / | / | / | / | / | / | / | 0.05 | 25 | 1.17 | 482 | 80% |
| Comparative Example 1-2 | / | / | / | / | / | / | / | / | / | / | / | / | / | 3 | 0.20 | 365 | 93% |
| Comparative Example 1-3 | / | / | / | / | / | / | / | / | / | / | Na | 0.10% | 0.04 | 5 | 1.04 | 543 | 81% |
| Comparative Example 1-4 | / | / | / | / | / | / | / | / | / | / | Na | 0.08% | 0.05 | 5 | 1.08 | 552 | 81% |

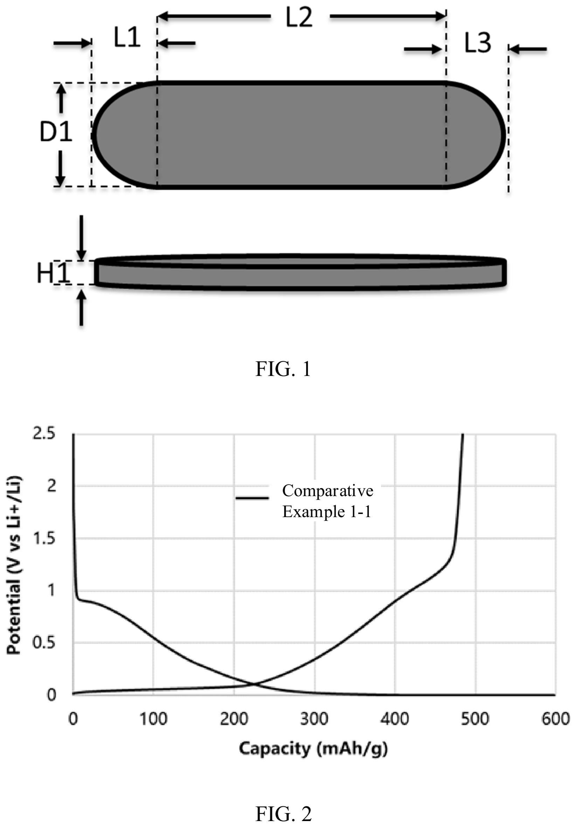

As shown in FIG. 1, the hard carbon material provided by the present application is flake-like. According to the results presented in Table 1, it can be seen that using the flake-like hard carbon material with a specific morphology provided by the present application as the negative electrode active material results in a higher gram capacity for lithium storage in the range of 0 V to 2.5 V, and the negative electrode active material provided by the present application has a higher gram capacity and reversible capacity. The morphology of the hard carbon material provided by the present application is mainly influenced by the sample synthesis conditions, primarily including the influence of the template agent (stearic acid flake dispersion) and the activator (NaOH, LiOH, KOH, or RbOH). When the amount of template agent is small, the prepared hard carbon material has a longer length. When the amount of template agent is large, the prepared hard carbon material has a shorter length and smaller thickness. When the type of activator changes, higher activity of the activator means a smaller the overall size of the prepared material particles. By adjusting the corresponding process parameters, and adjusting the relevant parameters of the hard carbon material in the present application, the material's gram capacity, initial efficiency, and other performance are significantly improved.

Meanwhile, FIG. 2 shows a charge-discharge curve of the negative electrode active material of Comparative Example 1-1 with lithium metal as the counter electrode in the Li/Li⁺ potential range of 0 V to 2.5 V. From FIG. 2, it can be seen that in the Li/Li⁺ potential range of 0 V to 0.2 V, the specific capacity of the negative electrode active material of Comparative Example 1-1 is 233 mAh/g. In the Li/Li⁺ potential range of 0 V to 2.5 V, the specific capacity of the negative electrode active material of Comparative Example 1-1 is 482 mAh/g.

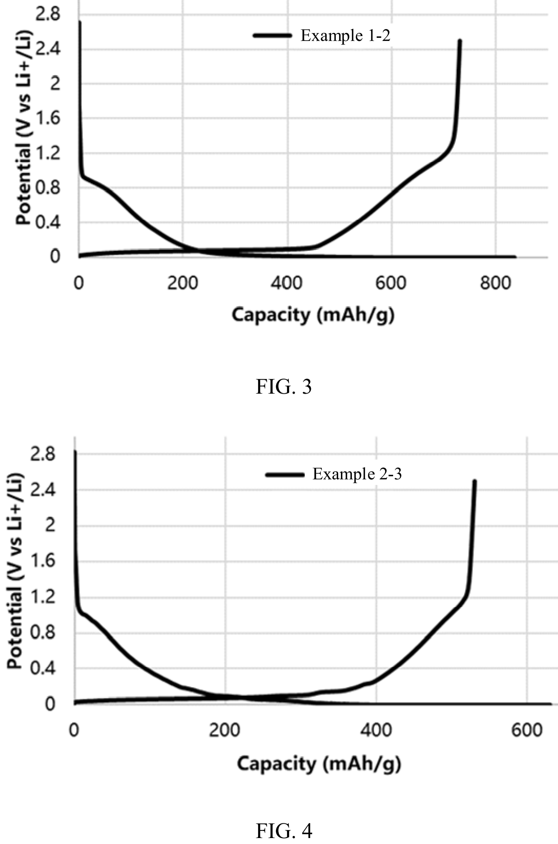

FIG. 3 shows a charge-discharge curve of the negative electrode active material prepared in Example 1-2 with lithium metal as the counter electrode in the Li/Li⁺ potential range of 0 V to 2.5 V. From FIG. 3, it can be seen that in the Li/Li⁺ potential range of 0 V to 0.2 V, the specific capacity of Example 1-2 is 483 mAh/g. In the Li/Li⁺ potential range of 0 V to 2.5 V, the specific capacity of the negative electrode active material of Example 1-2 is 720 mAh/g. This indicates that the negative electrode active material of Example 1-2 has a high specific capacity. The negative electrode active material of Example 1-2 has a stable low-potential platform, exhibiting a higher energy density when applied to a full battery.

### Effect Example 2

With the test methods described above, the compacted density of the negative electrode active material layers and the relevant performance of the lithium-ion batteries corresponding to Examples 1-2, 1-7, 2-1 to 2-5, and Comparative Examples 2-1 to 2-5 were further tested, with the results shown in Table 2:

**Table 2**

| Group | Compacted density (g/cc) | Gram capacity (mAh/g) | Energy density (Wh/L) | Rate performance | Cycle capacity retention rate |
|---|---|---|---|---|---|
| Example 1-2 | 1.18 | 720 | 756 | 83% | 87% |
| Example 1-7 | 1.13 | 711 | 715 | 83% | 87% |
| Example 2-1 | 1.87 | 405 | 687 | 84% | 88% |
| Example 2-2 | 1.71 | 474 | 728 | 86% | 91% |
| Example 2-3 | 1.57 | 552 | 769 | 85% | 91% |
| Example 2-4 | 1.41 | 629 | 781 | 86% | 93% |
| Example 2-5 | 1.27 | 707 | 781 | 84% | 89% |
| Comparative Example 2-1 | 1.83 | 377 | 627 | 82% | 87% |
| Comparative Example 2-2 | 1.69 | 392 | 596 | 84% | 88% |
| Comparative Example 2-3 | 1.55 | 415 | 573 | 82% | 88% |
| Comparative Example 2-4 | 1.38 | 438 | 533 | 83% | 89% |
| Comparative Example 2-5 | 1.24 | 461 | 499 | 82% | 87% |

Table 2 shows the compacted density of the negative electrode active material layer and the lithium-ion battery data for Examples 1-2, 1-7, 2-1 to 2-5, and Comparative Examples 2-1 to 2-5. From Table 2, it can be seen that the compacted density of the negative electrode active material is significantly influenced by the composition of the active material. Typically, graphite has a high compacted density but graphite has a low gram capacity and poor rate performance, hard carbon materials have a high gram capacity but a relatively low compacted density. Further compounding the hard carbon material with a specific morphology with graphite material in the present application offers a negative electrode material with both a high capacity and a high compacted density. However, from the data in Table 2, it can also be seen that using ordinary granular hard carbon with graphite is not conducive to compounding. Compounding the flake-like hard carbon material provided by the present application with the graphite material increases contact between hard carbon particles and between hard carbon and graphite particles, facilitating a reduction in electrode plate resistance and further improving the rate performance of the negative electrode active material. From Examples 2-1 to 2-5, it can be seen that adjusting the relative proportion of flake-like hard carbon and graphite in the compounded electrode plate can further optimize the compacted density of the negative electrode active material layer, thereby improving the energy density, rate performance, and cycling retention rate of the secondary battery. Meanwhile, FIG. 4 shows a charge-discharge curve of the negative electrode active material prepared in Example 2-3 with lithium metal as the counter electrode in the Li/Li⁺ potential range of 0 V to 2.5 V. From FIG. 4, it can be seen that in the potential range of 0-0.2 V, there is a clear plateau, but it differs from the charge-discharge curves of traditional graphite and hard carbon, proving that the capacities of both graphite and hard carbon can be effectively utilized, with good interfacial conduction between particles. In the Li/Li⁺ potential range of 0 V to 0.2 V, the specific capacity of Example 2-3 is 386 mAh/g; and in the Li/Li⁺ potential range of 0 V to 2.5 V, the specific capacity of the negative electrode active material of Example 2-3 is 552 mAh/g. This indicates that the negative electrode active material of Example 2-3 has a high specific capacity.

The negative electrode active material of Example 2-3 has a stable low-potential platform. Additionally, due to the compounding of graphite and hard carbon in Example 2-3, the negative electrode active material further has a high compacted density, exhibiting higher energy density, rate performance, and cycling retention rate when the negative electrode active material n in Example 2-3 is applied to a full battery.

It can be understood that the present application is described through some embodiments, and those skilled in the art know that various changes or equivalent substitutions can be made to these features and embodiments without departing from the spirit and scope of the present application. In addition, under the teachings of the present application, these features and embodiments can be modified to adapt to specific situations and materials without departing from the scope of the present application. Therefore, the present application is not limited by the specific embodiments disclosed herein, and all embodiments falling within the scope of the claims of the present application are within the scope of protection of the present application.

## Claims

1. A hard carbon material, wherein the hard carbon material has a flake-like structure, a length of the flake-like structure is denoted as L, and a width of the flake-like structure is denoted as D1, wherein L satisfies: 2 µm ≤ L ≤ 16 µm, and D1 satisfies: 0.1 µm ≤ D1 ≤ 3 µm.

2. The hard carbon material according to claim 1, wherein the hard carbon material satisfies at least one of the following conditions:
(1) 2 µm ≤ L ≤ 15 µm;
(2) 0.5 µm ≤ D1 ≤ 1.9 µm; or
(3) a height H1 of the flake-like structure satisfies: 0.02 µm ≤ H1 ≤ 2.5 µm.

3. The hard carbon material according to claim 1 or 2, wherein a ratio of the length L of the flake-like structure to a height H1 of the flake-like structure satisfies: 2.5 ≤ L/H1 ≤ 750.

4. The hard carbon material according to any one of claims 1 to 3, wherein a ratio of the width D1 of the flake-like structure to a height H1 of the flake-like structure satisfies: 1 ≤ D1/H1 ≤ 12.

5. The hard carbon material according to any one of claims 1 to 4, wherein the length L of the flake-like structure consists of a left arc surface length L1, a square region length L2, and a right arc surface length L3, wherein L1, L2, and L3 satisfy: 2 µm ≤ L1 + L2 + L3 ≤ 16 µm, 0.01 µm ≤ L1 ≤ 1.5 µm, and 10 ≤ L2/L1 ≤ 80.

6. The hard carbon material according to claim 5, wherein the hard carbon material satisfies at least one of the following conditions:
(1) 2 µm ≤ L1 + L2 + L3 ≤ 15 µm;
(2) 0.05 µm ≤ L1 ≤ 1 µm; or
(3) 11 ≤ L2/L1 ≤ 38.

7. The hard carbon material according to claim 5 or 6, wherein the hard carbon material satisfies at least one of the following conditions:
(1) 0.8 µm ≤ L2 ≤ 15 µm; or
(2) 0.05 µm ≤ L3 ≤ 1.5 µm.

8. The hard carbon material according to any one of claims 1 to 7, wherein a closed-pore volume of the hard carbon material is 0.01-0.4 cm³/g.

9. The hard carbon material according to any one of claims 1 to 8, wherein the hard carbon material satisfies at least one of the following conditions:
(1) a surface of the hard carbon material further comprises a carbon coating layer;
(2) the hard carbon material contains a first element, wherein the first element comprises at least one of Li, Na, K, Rb, Mg, Ca, or Zn;
(3) a specific surface area of the hard carbon material ranges from 2-28 m²/g; or
(4) an ID/IG value of the hard carbon material is 1.0-1.3.

10. The hard carbon material according to any one of claims 1 to 9, wherein a surface of the hard carbon material further comprises a carbon coating layer, a thickness of the carbon coating layer ranges from 20-100 nm.

11. The hard carbon material according to any one of claims 1 to 10, wherein the hard carbon material contains a first element, the first element comprises at least one of Li, Na, K, Rb, Mg, Ca, or Zn, and a percentage of the first element relative to a total mass of the hard carbon material is 0.01%-0.9%.

12. A secondary battery comprising a positive electrode plate, a negative electrode plate, and an electrolyte; the negative electrode plate comprising a negative electrode current collector and a negative electrode active material layer disposed on at least one surface of the negative electrode current collector; wherein the negative electrode active material layer comprises a negative electrode active material, and the negative electrode active material comprises the hard carbon material according to any one of claims 1 to 11.

13. The secondary battery according to claim 12, wherein the negative electrode active material further comprises a graphite material; based on a total mass of the negative electrode active material, a mass percentage of the hard carbon material is 0.1% to 99.9%.

14. The secondary battery according to claim 12 or 13, wherein a compacted density of the negative electrode active material layer ranges from 1.0-1.9 g/cm³.

15. An electronic apparatus, wherein the electronic apparatus comprises the secondary battery according to any one of claims 12 to 14.
